# EUROPEAN PATENT APPLICATION

(11) **EP 1 845 294 A2**
(43) Date of publication of application: **17.10.2007**
(21) Application number: 07106122.0
(22) Date of filing: 13.04.2007
(51) Int. Cl.: F16K 31/42

(54) **Guided pneumatic second stage switching valve**

(30) Priority: 13.04.2006 US 404327
(71) Applicant: Honeywell International Inc., Morristown, NJ 07962 (US)
(72) Inventor: Tanner, Justin A., Queen Creek, AZ 85242 (US); Smith, Douglas C., Phoenix, AZ 85020 (US); Boyer, David E., Higley, AZ 85236 (US); Franconi, Robert B., New Hartford, AZ 06057 (US); Goodman, Craig M., Chandler, AZ 85225 (US)
(74) Representative: Haley, Stephen

(57) **Abstract**

A bleed air valve system is provided that includes a housing (180), a piston (182), a cap (204), a poppet (184), a first guide ring (190), and a second guide ring (192). The housing (180) includes an upper valve seat (186) extending radially inwardly therefrom. The piston (182) is located at least partially in the housing (180). The cap (204) is coupled to the housing (180) and irtcludes an annular axial section (212) located therein and a lower valve seat (188). The poppet (184) is located at least partially within the housing (180) and includes a piston coupling section (234), a valve body section (236) having an upper valve seat contact surface (242) and a lower valve seat contact surface (244) extending radially outwardly therefrom, and a guide section (238) extending through the cap annular axial section (212). One guide ring (190) is coupled to the piston (182) to contact the housing inner surface (194). Another guide ring (192) is coupled to the poppet guide section (238) and contacts the cap annular axial section (212).

## Description

The present invention relates to a gas turbine engine and, more particularly, to a system for guiding a valve used in a two stage pneumatic switching valve.

A gas turbine engine may be used to supply power to various types of vehicles and systems, including, for example, an aircraft. Many gas turbine engines include at least one or more compressor sections, a combustor section, and a turbine section. The one or more compressor sections receive a flow of intake air and raise the pressure of this air to a relatively high level. The air then enters the combustor section where fuel nozzles inject a steady stream of fuel thereto, and the injected fuel is ignited by a burner. When the energy of the compressed air is sufficiently increased, the high-energy compressed air then flows into and through the turbine section, causing rotationally mounted turbine blades to rotate and generate energy.

In addition to providing propulsion power, the gas turbine engine may also be used to supply either, or both, electrical and pneumatic power to the aircraft. Some gas turbine engines include a bleed air port between the compressor section and the turbine section which diverts a portion of the compressed air from the compressor section to various aircraft systems and/or components. For example, the bleed air may be used in aircraft cabin cooling systems, deicing systems, or simply bled overboard to assist in engine starting and surge protection. In some configurations, the flow of the bleed air is governed by one or more bleed valves that are controlled by one or more control valves, such as a switching valve assembly.

When instantaneous control of the bleed air flow is preferred, a two stage switching valve assembly may be employed. In one configuration, the two stage switching valve assembly includes a three-way solenoid valve that operates a second stage, three-way pneumatic amplifier, such as a poppet valve. The solenoid valve is adapted to receive a current and, in response, opens or closes to respectively allow or prevent bleed air flow through it. The poppet valve, in response to the flow of bleed air through the solenoid valve, slides back and forth through a cylinder-like housing to engage either an upper valve seat or a lower valve seat, and thereby control bleed air delivery. When the poppet engages the upper valve seat, bleed air is prevented from flowing to various aircraft systems and/or components. Conversely, when the poppet engages the lower valve seat, bleed air is allowed to flow to the various aircraft systems and/or components.

Although the above described two stage switching valve system configuration adequately controls the flow of the bleed air, it has certain drawbacks. For example, after repeated contact between the poppet and housing, the poppet may abrade the housing and cause wear and erosion thereof. As a result, surfaces of the poppet and/or the housing may become rough or galled, preventing the poppet from moving smoothly through the housing. Additionally, the poppet may become misaligned relative to the housing seating surfaces.

Therefore, there is a need for a switching valve system that includes a poppet that does not abrade the housing within which it is located. Moreover, it is desirable for the poppet and components in the housing to remain aligned, even after repeated usage. The present invention addresses one or more of these needs.

The present invention provides a bleed air control valve system. In one embodiment, and by way of example only, the system includes a housing, a piston, a cap, a poppet, a first guide ring, and a second guide ring. The housing includes a first end, a second end, and an inner surface having an upper valve seat extending radially inwardly therefrom. The piston is located at least partially in the housing proximate the housing first end, and the piston is configured to move axially through the housing between a first position and a second position. The cap is coupled to the housing second end and includes a plate and an annular axial section extending therefrom. The annular axial section is located in the housing second end and has a lower valve seat formed thereon. The poppet is located at least partially within the housing downstream of the piston and includes a piston coupling section, a valve body section, and a guide section, the piston coupling section coupled to the piston, the valve body section including an outer surface having an upper valve seat contact surface and a lower valve seat contact surface extending radially outwardly therefrom, the upper valve seat contact surface contacting the upper valve seat when the piston is in the first position, the lower valve seat contact surface contacting the lower valve seat when the piston is in the second position, and the guide section extending through the cap annular axial section. The first guide ring is coupled to the piston and extends radially outwardly therefrom contacting the housing inner surface. The second guide ring is coupled to the poppet guide section and extends radially outwardly therefrom contacting the cap annular axial section.

In another embodiment, and by way of example only, a control valve is provided for controlling air flow in a system including an inlet and an outlet. The control valve includes a solenoid, a ball pilot valve, a housing, a piston, a cap, a poppet, a first guide ring, and a second guide ring. The solenoid is adapted to receive a current. The ball pilot valve assembly is in communication with the solenoid and located between the inlet and the outlet. The ball pilot valve assembly is movable when the solenoid receives the current between at least (i) a closed position, in which the inlet is not in fluid communication with the outlet, and (ii) an open position, in which the inlet is in fluid communication with the outlet allowing the air to flow therebetween. The housing includes a first end, a second end, and an inner surface, and the housing inner surface defines a chamber in communication with the outlet and has an upper valve seat extending radially inwardly therefrom. The piston is located at least partially in the housing proximate the housing first end and has an upstream side and a downstream side. The piston upstream end is configured to receive the air from the outlet and to cause the piston to move, in response thereto, axially through the housing between a first position and a second position. The cap is coupled to the housing second end and includes a plate and an annular axial section extending therefrom. The annular axial section is located in the housing second end and has an annular end defining a lower valve seat thereon. The poppet is located at least partially within the housing downstream of the piston and includes a piston coupling section, a valve body section, and a guide section, where the piston coupling section is coupled to the piston downstream side, the valve body section includes an outer surface having an upper valve seat contact surface and a lower valve seat contact surface extending radially outwardly therefrom, the upper valve seat contact surface contacts the upper valve seat when the piston is in the first position and the lower valve seat contact surface contacting the lower valve seat when the piston is in the second position, and the guide section extends through the cap annular axially extending section. The first guide ring is coupled to the piston and extending radially outwardly therefrom to contact the housing inner surface. The second guide ring is coupled to the poppet guide section and extends radially outwardly therefrom to contact the cap annular axially extending section.

Other independent features and advantages of the preferred system will become apparent from the following detailed description, taken in conjunction with the accompanying drawings which illustrate, by way of example, the principles of the invention.

### IN THE DRAWINGS

FIG. 1 is a simplified schematic of an exemplary multi-spool turbofan gas turbine engine; and

FIG. 2 is a cross section of an exemplary switching valve system that may be implemented in the engine depicted in FIG. 1.

Before proceeding with the detailed description, it is to be appreciated that the following detailed description is merely exemplary in nature and is not intended to limit the invention or the application and uses of the invention. In this regard, it is to be additionally appreciated that the described embodiment is not limited to use in conjunction with a particular type of turbine engine. Hence, although the present embodiment is, for convenience of explanation, depicted and described as being implemented in a multi-spool gas turbine jet engine, it will be appreciated that it can be implemented in various other types of turbines, and in various other systems and environments. Furthermore, there is no intention to be bound by any theory presented in the preceding background or the following detailed description.

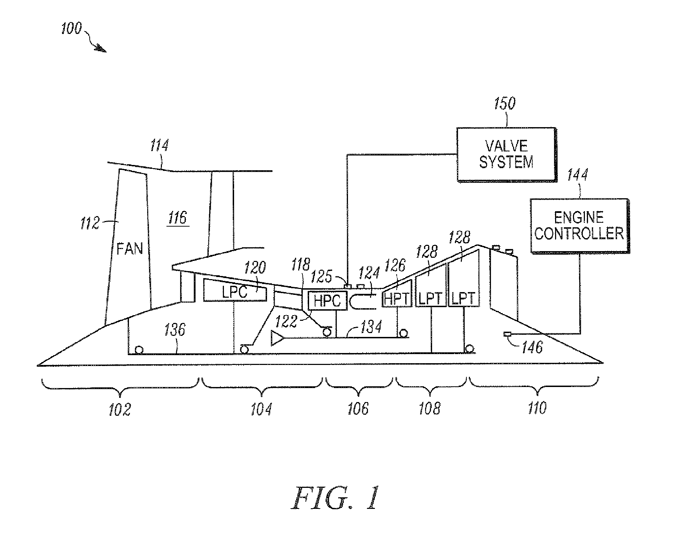

A simplified representation of an exemplary multi-spool turbofan gas turbine jet engine 100 is depicted in FIG. 1, and includes an intake section 102, a compressor section 104, a combustion section 106, a turbine section 108, and an exhaust section 110. The intake section 102 includes a fan 112, which is mounted in a fan case 114. The fan 112 draws air into the intake section 102 and accelerates it. A fraction of the accelerated air exhausted from the fan 112 is directed through a bypass section 116 (shown only partially in FIG. 1) located between the fan case 114 and an engine case 118, and provides a forward thrust. The remaining fraction of air exhausted from the fan 112 is directed into the compressor section 104.

The compressor section 104 includes two compressors, a low pressure compressor 120, and a high pressure compressor 122. The low pressure compressor 120 raises the pressure of the air directed into it from the fan 112, and directs the compressed air into the high pressure compressor 122. The high pressure compressor 122 compresses the air still further, and directs the high pressure air into the combustion section 106. A bleed air port 125 is located downstream if the high pressure compressor 122 and is configured to bleed a portion of the compressed air to various channels leading to other sections of the aircraft. Regulation of bleed air flow is governed by a switching valve system 150, which will be discussed in more detail below. In the combustion section 106, which includes a combustor 124, a plurality of non-illustrated fuel injectors, and one or more non-illustrated igniters, the high pressure air is mixed with fuel and combusted. The combusted air is then directed into the turbine section 108.

The turbine section 108 includes two turbines, a high pressure turbine 126 and a low pressure turbine 128, located in axial flow series in the engine case 118. The combusted air from the combustion section 106 expands through each turbine 126, 128, causing each to rotate. The air is then exhausted through a propulsion nozzle located in the exhaust section 110, providing addition forward thrust. As the turbines rotate, each drives equipment in the engine 100 via concentrically located shafts or spools. For example, the low pressure turbine 128 drives the fan 112 and the low pressure compressor 120 via a low pressure spool 136, and the high pressure turbine 126 drives the high pressure compressor 122 via a high pressure spool 134.

The overall operation of the engine 100 is controlled via an engine controller 144. The engine controller 144, as is generally known, is used to control the output power of the engine 100 by, for example, controlling fuel flow rate to the engine 100, and controlling airflow through the engine 100. The engine controller 144 also controls the flow of turbine bleed air from the engine 100 to various sections of the aircraft for starting the main engine, controlling the aircraft environment, controlling cabin pressure, and/or de-icing the aircraft. In the depicted embodiment, the engine controller 144 receives signals from a plurality of sensors 146 that are located at various locations on and within the engine 100. The sensors 146 are used to sense various physical parameters associated with the engine 100 such as, for example, various temperatures, engine speed, and air flow, and supply signals representative of the sensed parameters to the engine controller 144. The engine controller 144 processes the signals received from the sensors 146 and, among other things, supplies various commands to various components of the engine 100 to control its operation. It will be appreciated that the engine controller 144 may be any one of numerous types of engine controllers such as, for example, a FADEC (Full Authority Digital Engine Controller).

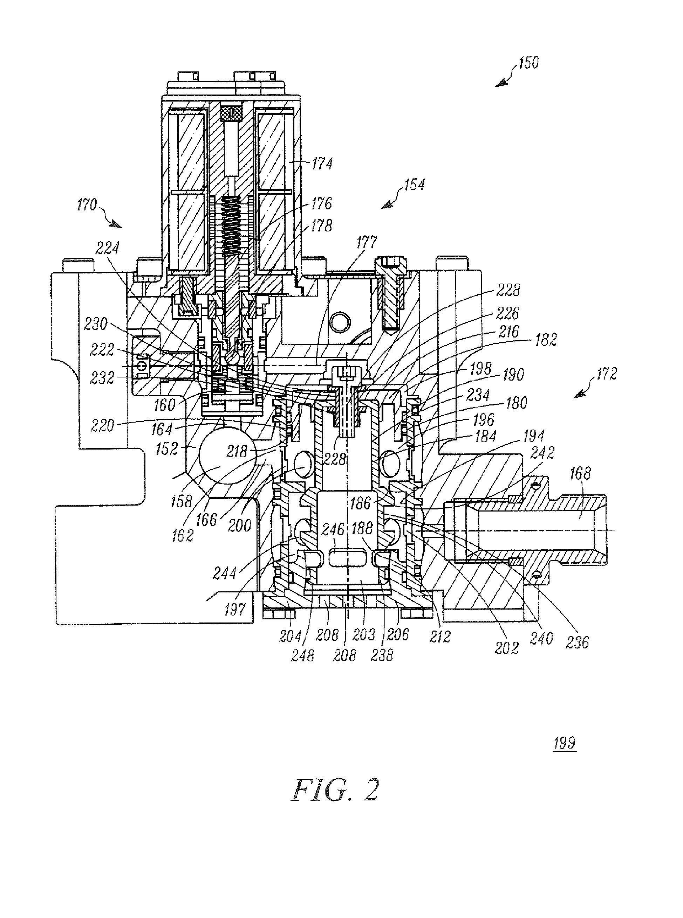

As briefly mentioned above, the switching valve system 150 governs the flow of bleed air. The switching valve system 150 is coupled to the engine controller 144 and selectively bleeds and directs some of the air discharged from the compressor section 104 to one or more sections of the aircraft via a downstream channel 168. FIG. 2 shows an exemplary switching valve system 150, which includes a bleed air conduit system 152 that is coupled to a two stage solenoid-activated control system 154. The bleed air conduit system 152 receives bleed air from the bleed air port 125 and includes an inlet 158, a first stage outlet 160, a second stage outlet 162 and first and second stage channels 164, 166 that fluidly couple the inlet 158 and outlets 160, 162 together, respectively.

The two stage solenoid-activated control system 154 includes a first stage solenoid valve assembly 170 and a second stage poppet valve assembly 172. The two assemblies 170, 172 cooperate to substantially instantaneously supply or prevent bleed air flow upon receiving appropriate commands from, for example, the engine controller 144. The first stage solenoid valve assembly 170 is in flow communication with the first stage channel 164 to receive air from the inlet 158, and includes a solenoid 174, an actuator 176, and a ball pilot valve 178. The solenoid 174 is electrically coupled to receive current from a non-illustrated energy source which may receive energize/de-energize commands from the engine controller 144. The energized solenoid 174 causes the actuator 176 to move. The ball pilot valve 178 is coupled to the actuator 176 and includes at least a portion that is configured to move into and out of the first stage outlet 160.

The second stage poppet valve assembly 172 fluidly communicates with the first stage solenoid valve assembly 170 via a valve connector channel 177 and with the bleed air conduit system 152 via the second stage channel 166. The second stage poppet valve assembly 172 includes a housing 180, a piston 182, a poppet 184, an upper and a lower valve seat 186, 188, and two guide rings 190, 192. The housing 180 is preferably at least substantially cylindrical and has an inner surface 194 that defines an upper chamber 196 and a lower chamber 197. A valve opening 198 formed in the housing 180 provides communication between the upper chamber 196 and the valve connector channel 177, while one or more bleed air openings 200 formed downstream of the valve opening 198 provides communication between the upper chamber 196 and the bleed air conduit system 152. The housing 180 also includes one or more main outlets 202 and a vent outlet 203 formed therein to provide communication between the lower chamber 197 and the downstream channel 168 and ambient environment 199, respectively.

In some embodiments, such as shown in FIG. 2, the vent outlet 203 is covered with a cap 204 to prevent debris that may be present in the ambient environment 199 from entering the poppet valve assembly 172 and hampering functional operation. The cap 204 includes a plate 206 having a plurality of apertures 208 formed therein and an annular axial section 212 that extends from the plate 206 into the lower chamber 197. The end of the annular axial section 212 includes the lower valve seat 188 formed thereon. In other embodiments, the lower valve seat 188 may be formed on the housing inner surface 194 in the lower chamber 197 and may extend radially inwardly therefrom.

The upper valve seat 186 is located between the upper and lower chambers 196, 197 and is also configured to selectively contact a portion of the poppet 184. In one exemplary embodiment, such as illustrated in FIG. 2, the upper valve seat 186 extends radially inwardly from the housing inner surface 194 forming an annular flange thereon.

The piston 182 is located between the valve opening 198 and upper valve seat 186 and is configured to slidably move therebetween. In this regard, the piston 182 is generally disk-shaped and has an upstream side 216 in communication with the bleed air and a downstream side 218. The downstream side 218 is coupled to the poppet 184 which may be fastened thereto in any one of numerous fashions. A dynamic seal 220 may be located around the outer peripheral surface of the piston 182 to at least substantially prevent bleed air leakage through the poppet valve assembly 172. In the embodiment shown in FIG. 2, the piston 182 and a substantially closed upstream end 222 of the poppet 184 each include fastener openings 224, 226 formed therein through which a bolt 228 is threaded. Preferably, the bolt 228 forms a leaktight seal with the piston 182 to prevent air from flowing through the fastener openings 224, 226. Thus, in some cases, washers 230, 232, or other sealing mechanisms are located in the fastener openings 224, 226.

The poppet 184 extends from the piston 182 through the housing 180 and includes a piston coupling section 234, a valve body section 236, and a guide section 238. The piston coupling section 234, as alluded to above, includes the substantially closed upstream end 222, and also briefly alluded to above, is fastened to the piston 182. The valve body section 236 extends between the housing upper valve seat 186 and the housing outlet 202 and has an outer surface 240 from which an upstream and a lower valve seat contact surface 242, 244 extend radially outward. It will be appreciated that the upper valve seat contact surface 242 is configured to contact the upper valve seat 186, while the lower valve seat contact surface 244 is configured to contact against the lower valve seat 188. In some embodiments, such as shown in FIG. 2, each of the valve seats 186, 214 and valve seat contact surfaces 242, 244 are chamfered to reduce wear caused by repeated contact therebetween.

The guide section 238 prevents the components of the second stage poppet valve assembly 172 from becoming misaligned and extends at least partially through the annular axial section 212 of the cap 204. To further ensure alignment of the piston 182 and poppet 184, the guide rings 190, 192 are included. The guide rings 190, 192 are preferably made of non-metallic material that is different than the materials from which the housing 180, piston 182, poppet 184, and cap 204 are made, and that is wear and friction resistant. For example, suitable materials include various wear resistant, low friction thermoplastics such as, for example, polytetrafluoroethylene, filled tetrafluoroethylene polymers, polyetheretheketones, and filled polyimide resins. Preferably, one guide ring 190 is located on the outer peripheral surface of the piston 182 to thereby maintain a predetermined distance between the piston 182 and the housing inner surface 194, while the other guide ring 192 is coupled to an outer surface of the guide section 238 to maintain the poppet 184 and the cap annular axial section 212 spaced apart a predetermined distance from one another.

In some embodiments, the guide section 238 may be configured to provide additional pathways for the bleed air to travel when the poppet 184 is unseated from the lower valve seat 188. In this regard, openings 246 may be included in the guide section 238 that are formed between the lower valve seat contact surface 244 and downstream end 248 of the poppet 184.

During aircraft operation when the two stage solenoid actuated system 154 is de-energized, bleed air enters the bleed air conduit system inlet 158. Because the solenoid 174 is de-energized, the actuator 176 moves the ball pilot valve 178 into the first stage outlet 160 preventing bleed air flow through the first stage solenoid valve assembly 170. The bleed air does, however, flow into the second stage poppet valve assembly 172. In particular, the bleed air travels through the second stage outlet 162 through one or more of the bleed air openings 200 of the housing 180 and exerts pressure against the downstream side 218 of the piston 182 to maintain the piston 182 in a first, closed position. As a result, the upper valve seat contact surface 242 contacts the upper valve seat 186 preventing the bleed air from flowing to the downstream channel 168. When bleed air is needed, the solenoid 174 moves the actuator 176, which, in turn, lifts the ball pilot valve 178 out of the first stage outlet 160 allowing the bleed air conduit system inlet 158 and the second stage housing valve opening 198 to fluidly communication with one another. Consequently, bleed air flows through the first stage channel 164 and the valve connector channel 177 to the second stage poppet valve assembly 172.

When the bleed air from the valve connector channel 177 contacts the piston 182, the piston 182 and the poppet 184 slide axially through the housing 180 to a second, open position where the lower valve seat contact surface 244 seats against the lower valve seat 188. As a result, bleed air in the inlet 158 flows through the second stage channel 166 into and through the housing bleed air openings 200, around the upper valve seat contact surface 242 through one or more of the main outlets 202, and into the downstream channel 168. After a sufficient amount of air is bled into the downstream channel 168, solenoid 174 is de-energized. As a result, bleed air in the first stage solenoid assembly 170 is vented through a non-illustrated vent, the ball pilot valve 178 returns to a position to block the first stage outlet 160, and the upper valve seat contact surface 242 seats against the upper valve seat 186. Additionally, in many cases, a residual amount of bleed air may be present in the downstream channel 168 and may need to be vented. In such case, the bleed air reenters the lower chamber 197 of the housing 180 and because the lower valve seat contact surface 244 is unseated from the lower valve seat 188, the air is able to flow therearound and to exit into the ambient environment 199 via the cap plate apertures 208.

During operation, the guide rings 190, 192 prevent the piston 182, poppet 184, and housing 180 from abrading. Additionally, the guide rings 190, 192, in conjunction with the poppet guide section 238, maintain the piston 182 and poppet 184 aligned within the housing 180.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments failing within the scope of the appended claims.

## Claims

1. A bleed air control valve system comprising:
a housing (180) including a first end, a second end, and an inner surface (194) having an upper valve seat (186) extending radially inwardly therefrom;
a piston (182) located at least partially in the housing (180) proximate the housing first end, the piston (182) configured to move axially through the housing (180) between a first position and a second position;
a cap (204) coupled to the housing second end including a plate (206) and an annular axial section (212) extending therefrom, the annular axial section (212) located in the housing second end and having a lower valve seat (188) formed thereon;
a poppet (184) located at least partially within the housing (180) downstream of the piston (182) and including a piston coupling section (234), a valve body section (236), and a guide section (238), the piston coupling section (234) coupled to the piston (182), the valve body section (236) including an outer surface (240) having an upper valve seat contact surface (242) and a lower valve seat contact surface (244) extending radially outwardly therefrom, the upper valve seat contact surface (242) contacting the upper valve seat (186) when the piston (182) is in the first position, the lower valve seat contact surface (244) contacting the lower valve seat (188) when the piston (182) is in the second position, and the guide section (238) extending through the cap annular axial section (212);
a first guide ring (190) coupled to the piston (182) and extending radially outwardly therefrom contacting the housing inner surface (194); and
a second guide ring (192) coupled to the poppet guide section (238) extending radially outwardly therefrom contacting the cap annular axial section (212).

2. The control valve of claim 1, wherein the poppet guide section (238) includes an inner surface, an outer surface, and an opening (198) formed therethrough.

3. The control valve of claim 1, wherein the cap plate (206) includes a plurality of apertures (208) formed therein.

4. The control valve of claim 1, wherein a portion of the upper valve seat (186) that is configured to contact the poppet upper valve seat contact surface (242) is at least partially chamfered.

5. The control valve of claim 1, wherein a portion of the cap lower valve seat (188) that is configured to contact the poppet lower valve seat contact surface (244) is at least partially chamfered.

6. The control valve of claim 1, wherein one of the first and second guide rings (190, 192) comprises a non-metallic material.

7. The control valve of claim 6, wherein at least one of the first and second guide rings (190, 192) comprises a thermoplastic.

8. The control valve of claim 6, wherein at least one of the first and second guide rings (190, 192) comprises a material selected from the group consisting of polytetrafluoroethylene, filled tetrafluoroethylene polymers, polyetheretheketones, and filled polyimide resins.

9. The control valve of claim 1, wherein the housing (180), piston (182), and poppet (184) each comprise materials that are substantially similar to each other and the guide rings (190, 192) comprise a different material.
